# EUROPEAN PATENT APPLICATION

(11) **EP 2 202 963 A2**
(43) Date of publication of application: **30.06.2010**
(21) Application number: 09174904.4
(22) Date of filing: 03.11.2009
(51) Int. Cl.: H04N 5/445

(54) **Program information displaying method and display apparatus using the same**

(30) Priority: 24.12.2008 KR 20080133608
(71) Applicant: SAMSUNG ELECTRONICS CO., LTD., Suwon-si Gyeonggi-do 442-742 (KR)
(72) Inventor: Hyun, Dae-eun, Gyeonggi-do (KR); Jang, Yong-seok, Suwon-si, Gyeonggi-do (KR)
(74) Representative: Robinson, Ian Michael

(57) **Abstract**

A method for displaying program information and a display apparatus thereof are provided. According to the present method for displaying program information, an EPG screen in which a plurality of items are aligned is generated and displayed. Accordingly, a user may view an EPG screen with better perspective and check program information more intuitively.

## Description

### CROSS-REFERENCE TO RELATED APPLICATIONS

This application claims the benefit of Korean Patent Application No.2008-0133608, filed in the Korean Intellectual Property Office on December 24, 2008, the disclosure of which is incorporated herein by reference.

### BACKGROUND OF THE INVENTION

### 1. Field of the Invention

Aspects of the present invention relate to a method for displaying program information and a display apparatus using the same, and more particularly, to a method for displaying program information which provides a user with better perspective regarding programs and a display apparatus thereof.

### 2. Description of the Related Art

Information regarding television broadcasting programs is usually provided via newspapers, television, or magazines. As many digital broadcasting stations provide a plurality of programs via a lot of channels, there are numerous channels that a user can choose, and thus, it has become more difficult and complicated for the user to select a channel from among those numerous channels.

Therefore, many digital broadcasting stations have an electronic program guide (EPG) as a basic data service which provides various information regarding each program such as program schedule or program content.

As technology advances, a user has been provided with many programs via numerous channels. As Internet communication is widely used, a user has also been able to watch television via Internet network.

As such, so many television programs are provided, and it has become more difficult for a user to check which programs are provided. The EPG provides program information on the television screen, but due to this spatial restriction, the EPG is not suitable to provide various information simultaneously.

Accordingly, there is a need to provide a user with a method for viewing television program information more conveniently.

### SUMMARY OF THE INVENTION

According to the present invention there is provided an apparatus and method as set forth in the appended claims. Other features of the invention will be apparent from the dependent claims, and the description which follows.

Aspects of the present invention relate to a method for proving program information which enables a user to view television program information more conveniently and to view an EPG screen with better perspective, and a display apparatus thereof.

A method for displaying program information, according to the exemplary embodiment of the present invention, comprises generating a Electronic Program Guide (EPG) screen in which a plurality of items indicating each program information are aligned to be overlapped with each other and displaying the EPG screen.

The plurality of items may be aligned in grid shape with reference to a first axis and a second axis.

One of the first axis and the second axis may parallel with the EPG screen and the other one of the first axis and the second axis may be in a direction which penetrates the EPG screen.

The plurality of items may overlap with each other along with at least one of the first axis and the second axis.

The method for displaying program information may further comprise moving the plurality of items in a direction of the first axis or the second axis, deleting items on one end of the first axis or the second axis, and generating new items on another end of the first or the second axis, if a command to change the program information is entered.

The size of the plurality of items may become bigger as they approach center or front.

The program information may include at least one of broadcasting time, title, genre, broadcasting channel, channel properties, and main image of a program.

The generating the EPG screen may generate the EPG screen so that one of broadcasting time, title, genre, broadcasting channel, channel properties, and main image of a program is aligned with reference to the first axis, and another one is aligned with reference to the second axis.

The broadcasting time may faster as the aligned items approach the front portion.

The method for displaying program information may further comprise displaying a list for setting functions on the back of the selected items after rotating the selected items, if some items are selected from among the plurality of items.

The list for setting functions may include at least one function of viewing a program, reserving a program, reserving recording, registering preferred channels and deleting preferred channels.

The program information may include at least one of information extracted from an additional data included in a broadcasting signal and information extracted from data received via Internet.

A method for displaying program information, according to the exemplary embodiment of the present invention, comprises generating an electronic program guide (EPG) screen by grouping a plurality of items indicating information regarding each program with reference to a first criterion and aligning the plurality of items with reference to a second criterion and displaying the EPG screen.

The generating the EPG screen may generate an EPG screen on which the items grouped according to the first criterion is overlapped.

The first criterion and the second criterion may be criteria based on program information.

The method for displaying program information, according to the exemplary embodiment of the present invention, comprise receiving a command to display the EPG screen and displaying items indicating a previous channel, a next channel, and program information of the next time in a first side, a second side, and a third side of the item respectively with reference to items indicating a current channel and program information of current time, if the command is received.

A display apparatus, according to the exemplary embodiment of the present invention, comprises a control unit to generate an EPG screen in which a plurality of items indicating information of each program are aligned and overlapped with each other; and a display unit to display the EPG screen.

The plurality of items may be aligned in grid shape with reference to the first axis and the second axis.

One of the first axis and the second axis may be parallel with the EPG screen and the other one of the first axis and the second axis may be disposed in a direction penetrating the EPG screen.

The plurality of items may be overlapped with each other along with at least one of the first axis and the second axis.

The display apparatus according to claim may further comprise a receiving unit to receive a user command wherein the control unit may delete items on one end of the first axis or the second axis by moving the plurality of items in a direction of the first axis and the second axis, and generate new items on the other end of the first axis or the second axis.

The size of the plurality of items may become bigger as the items approach middle or front.

The program information may include at least one of broadcasting time, title, genre, broadcasting channel, channel property and main image of the program.

The control unit may generate the EPG screen in which at least one of broadcasting time, title, genre, broadcasting channel, channel property and main image of the program is aligned with reference to the first axis, and another one is aligned with reference to the second axis.

The broadcasting time may be faster as the aligned items approach the front of the screen.

The control unit may display a list for setting functions on the back of the selected items by rotating the selected item, if some items are selected from among the plurality of items.

The list for setting functions may include at least one of viewing programs, reserving programs, reserving recording, registering preferred channels, deleting preferred channels and re-arranging channels.

The display apparatus may further comprise a broadcasting receiving unit to receive a broadcasting signal and an Internet interface to receive data via Internet wherein the program information may include at least one of data extracted from additional data included in a broadcasting signal and data extracted from data received via the Internet.

A display apparatus, according to the exemplary embodiment of the present invention, comprises a control unit to generate an EPG screen by grouping a plurality of items indicating information of each program with reference to a first criterion and aligning the plurality of items with reference to a second criterion and a display unit to display the EPG screen.

The control unit may generate the EPG screen in which the items grouped with reference with the first criterion are overlapped with each other.

The first criteria and the second criteria may be criteria based on the program information.

A display apparatus, according to the exemplary embodiment of the present invention, comprises a receiving unit to receive a command for displaying the EPG screen and a control unit to display items indicating a previous channel, a next channel, and program information of the next time in a first side, a second side, and a third side of the item respectively with reference to items indicating a current channel and program information of current time, if the command is received via the receiving unit.

### BRIEF DESCRIPTION OF THE DRAWINGS

These and/or other aspects and advantages of the invention will become apparent and more readily appreciated from the following description of the embodiments, taken in conjunction with the accompanying drawings, of which:
FIG. 1 is a block diagram of a digital television (DTV) according to an exemplary embodiment of the present invention;
FIG. 2 is a flow chart provided to explain the process of displaying an EPG screen;
FIG. 3 is a schematic view of an EPG screen according to an exemplary embodiment of the present invention;
FIG. 4 is a schematic view of an EPG screen according to another exemplary embodiment of the present invention;
FIG. 5 is a schematic view of an EPG screen according to another exemplary embodiment of the present invention;
FIG. 6 is a schematic view of an EPG screen according to another exemplary embodiment of the present invention;
FIG. 7 is a schematic view of an EPG screen according to another exemplary embodiment of the present invention;
FIG. 8 is a flow chart provided to explain the movement of an EPG screen;
FIG. 9 is a schematic view of an EPG screen moving according to an exemplary embodiment of the present invention;
FIG. 10 is a schematic view of an EPG screen moving according to an exemplary embodiment of the present invention;
FIG. 11 is a schematic view of an EPG screen moving according to another exemplary embodiment of the present invention;
FIG. 12 is a flow chart provided to explain the process of setting functions;
FIG. 13 is a schematic view provided to explain the process of setting functions;
FIG. 14 is a schematic view provided to explain the process of setting functions;
FIG. 15 is a schematic view provided to explain the process of setting functions;
FIG. 16 is a schematic view illustrating operation when function to realign channels is selected;
FIG. 17 is a schematic view of an EPG screen according to another exemplary embodiment of the present invention;
FIG. 18 is a schematic view of an EPG screen according to another exemplary embodiment of the present invention;
FIG. 19 is a schematic view in which highlights are moved while items are not moved.
FIG. 20 is a schematic view illustrating that a highlighted item is selected according to an exemplary embodiment of the present invention;
FIG. 21 is a schematic view illustrating that a highlighted item is selected according to another exemplary embodiment of the present invention; and
FIG. 22 is a schematic view illustrating that a highlighted item is selected according to another exemplary embodiment of the present invention.

### DETAILED DESCRIPTION OF THE EMBODIMENTS

Reference will now be made in detail to the exemplary embodiments of the present invention, examples of which are illustrated in the accompanying drawings, wherein like reference numerals refer to like elements throughout. The embodiments are described below, in order to explain the present invention by referring to the figures.

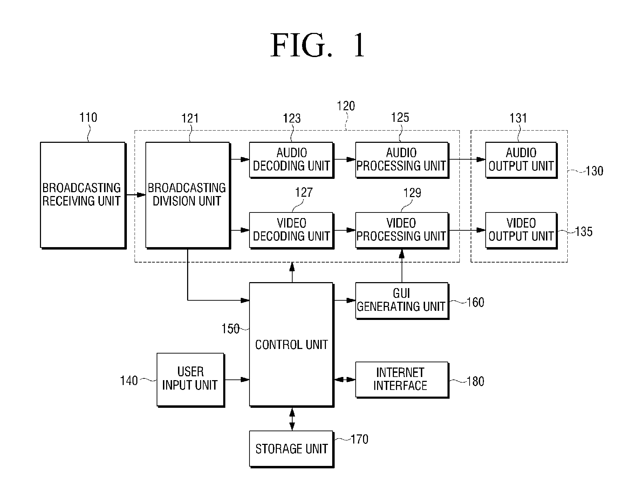

FIG. 1 is a block diagram of a DTV according to an exemplary embodiment of the present invention. The illustrated DTV is a broadcasting receiving apparatus which receives broadcasting programs and an EPG and provides them to a user.

As shown in FIG. 1, a DTV comprises a broadcasting receiving unit 110, a broadcasting processing unit 120, a broadcasting output unit 130, a user input unit 140, a control unit 150, a GUI generating unit 160, a storage unit 170, and an Internet interface unit 180.

The broadcasting receiving unit 110 selects and demodulates one of programs received with wire or wireless via major networks or cables.

The broadcasting processing unit 120 processes a broadcasting signal output from the broadcasting receiving unit 110. The broadcasting processing unit 120 comprises a broadcasting division unit 121, an audio decoding unit 123, an audio processing unit 125, a video decoding unit 127, and a video processing unit 129.

The broadcasting division unit 121 divides a broadcasting signal output from the broadcasting receiving unit 110 into an audio signal, a video signal and an additional data, and outputs them. The audio signal and video signal divided from the broadcasting signal are transmitted to the audio decoding unit 123 and the video decoding unit 127 respectively, and are used to provide digital broadcasting programs. The additional data divided from the broadcasting signal is transmitted to the control unit 150 and may be a program and system information protocol (PSIP). The EPG is included in the PSIP.

The audio decoding unit 123 decodes an audio signal output from the broadcasting division unit 121. Accordingly, an audio signal decoded by the audio decoding unit 123 is output.

The audio processing unit 125 converts the decoded audio signal output from the audio decoding unit 123 into an audio signal in a format that can be output via a speaker of the DTV.

The video decoding unit 127 decodes a video signal output from the broadcasting division unit 121. Accordingly, a decoded video signal is output from the video decoding unit 127.

The video processing unit 129 converts the decoded video signal output from the video decoding unit 127 into a video signal in a format that can be output via a display of the DTV. To do this, the video processing unit 129 performs color signal processing and scaling on the video signal.

The GUI generating unit 160 generates a GUI to be displayed under the control of the control unit 150. The GUI generated by the GUI generating unit 160 includes not only a GUI for receiving a user's command to operate DTV functions, but also a GUI for notifying the status of DTV operation. The GUI generated by the GUI generating unit 160 also includes a GUI having the EPG which provides a user with information regarding broadcasting programs.

The GUI generated by the GUI generating unit 160 is transmitted to the video processing unit 129 and added to the videos to be displayed.

The output unit 130 outputs a video and an audio corresponding to a video signal and an audio signal output from the broadcasting processing unit 120 respectively, and provides them to a user. The output unit 130 comprises an audio output unit 131 and a video output unit 135.

The audio output unit 131 outputs an audio signal output from the audio processing unit via the speaker, and the video output unit 135 outputs a video signal output from the video processing unit 129 via the display.

The storage unit 170 stores main image, the EPG information of broadcasting programs received from the broadcasting receiving unit 110, and programs for operating overall functions of the DTV. The storage unit 170 may be a hard-disk or a non-volatile memory.

The Internet interface 180 is connected to an external server via Internet and receives information regarding programs such as an EPG from the external server. That is, when receiving a user command to request information regarding a program, the Internet interface 180 receives information regarding the program from the external server and transmits it to the control unit 150.

According to the above description, EPG information is included in an addition data which is separated from a broadcasting signal. Accordingly, a user may select and use the EPG information extracted from the additional data and the program information extracted from the data received via the Internet interface 180. For instance, if a user needs simple information such as the genre of a program, the EPG information extracted from the additional data is used, and if a user wants to know previous works of a program guest, the program information extracted from the data received via the Internet interface 180 is used.

The user input unit 140 transmits a user's command input via a remote control (not shown) or a manipulation button (not shown) in the front panel of the DTV to the control unit 150.

The control unit 150 controls comprehensive operation of the DTV according to a user command received from the user input unit 140. More specifically, the control unit 150 controls the broadcasting receiving unit 110, the broadcasting processing unit 120, and the broadcasting output unit 130 so that the program the user selected can be broadcast.

The control unit 150 controls the GUI generating unit 160 so that the EPG screen can be displayed according to a user command received from the user input unit 140 to provide the EPG screen. The control unit 150 also controls the GUI generating unit 150 so that the EPG screen can be changed according to a user command received from the user input unit 140 to change the EPG screen. The control unit 150 controls the GUI generating unit 160 so that a list for setting functions can be provided according to a user command received from the user input unit 140 to set functions, and thus a user can set a certain function for a program selected from among programs on the EPG screen.

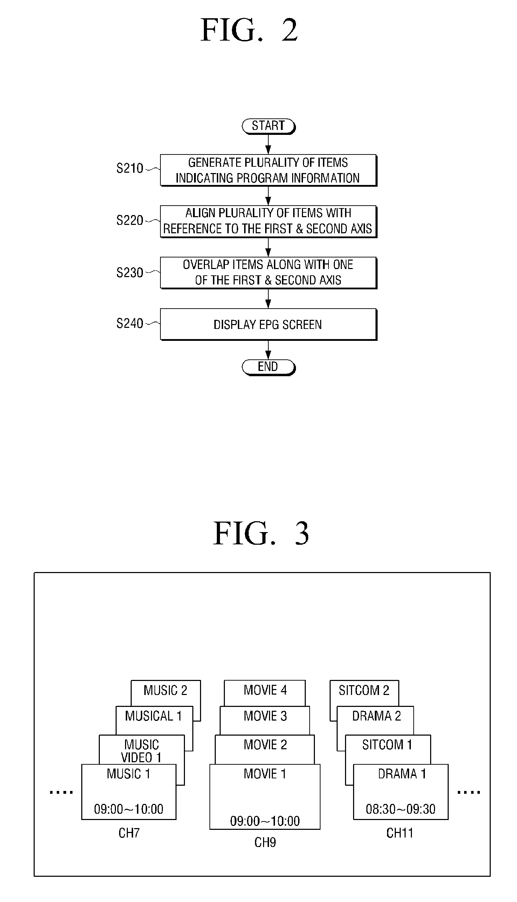

The process of generating and displaying an EPG screen will be explained in detail with reference to FIGS. 2 -7.

FIG. 2 is a flow chart provided to explain the process of displaying an EPG.

As illustrated in FIG. 2, the control unit 150 generates a plurality of items indicating information of each program, using the EPG information included in PSIP information (S210). The control unit 150 aligns the generated plurality of items with reference to the first axis and the second axis (S220), and controls the aligned plurality of items to overlap with each other along with one of the first axis and the second axis. This will be explained with reference to FIG. 3.

FIG. 3 is a schematic view of an EPG screen according to an exemplary embodiment of the present invention.

As shown in FIG. 3, the EPG screen comprises a plurality of items indicating information of each program.

The plurality of items of a channel are aligned in the direction of the first axis which is parallel with the EPG screen. That is, the programs broadcast via channel 7 are aligned on the left of the EPG screen, the programs broadcast via channel 9 are aligned at the center of the EPG screen, and the programs broadcast via channel 11 are aligned on the right of the EPG screen. The channels through which the programs are broadcast are displayed below the aligned items.

As for the items aligned in the direction of the first axis, the size of the items are bigger as they approach or are disposed closer to the center, i.e., an item at the center is displayed to be larger than items that are away from the center. This is to provide the EPG screen with reference to the item representing a channel viewed right before the current channel is off or power is turned off (hereinafter referred to as 'the current channel'), when a command to output an EPG screen is received via the user input unit 140.

The plurality of items represent names of each broadcasting program, and the item on the front part (lower part) of the EPG screen displays information regarding the broadcasting time of the current program along with the name of the program.

The plurality of items are also aligned in the direction of the second axis penetrating the EPG screen in time sequence. That is, the items indicating currently broadcasting programs are aligned to be disposed at the front (lower part) of the EPG screen, and the items indicating programs which will be broadcast later are aligned to be disposed toward the back, i.e., behind the items indicating the currently broadcasting programs.

For instance, if it is 09:01, items are aligned as shown in FIG. 3, but if it is 09:31, the item indicating "SITCOM 1", instead of "DRAMA 1", is located at the front for channel 11. In this case, the items for channel 7 and channel 9 do not change.

The plurality of items overlap with each other in the direction of the second axis penetrating the EPG screen. As for the items aligned in the direction of the second axis, the size of the items are larger as they approach the front (lower part). This is to provide the EPG screen with reference to the items representing the current time, when a command to output an EPG screen is received via the user input unit 140.

By aligning items indicating program information that are overlapped with each other, more program information can be displayed on the EPG screen. Additionally, better perspective regarding programs can be provided to a user. In particular, with 3-dimensional effect, a user may recognize the difference of broadcasting time intuitively.

Referring back to FIG. 2, the control unit 150 displays the generated EPG screen (S240).

For convenience of explanation, items in the front part (lower part) indicate information regarding broadcasting time according to the exemplary embodiment of the present invention, but this is only an example. Only the item in the middle of the items in the front part (lower part) may display information regarding broadcasting time. In this case, using the time information of the item in the middle of the items in the front part (lower part), a user may guess broadcasting time of the items at each side.

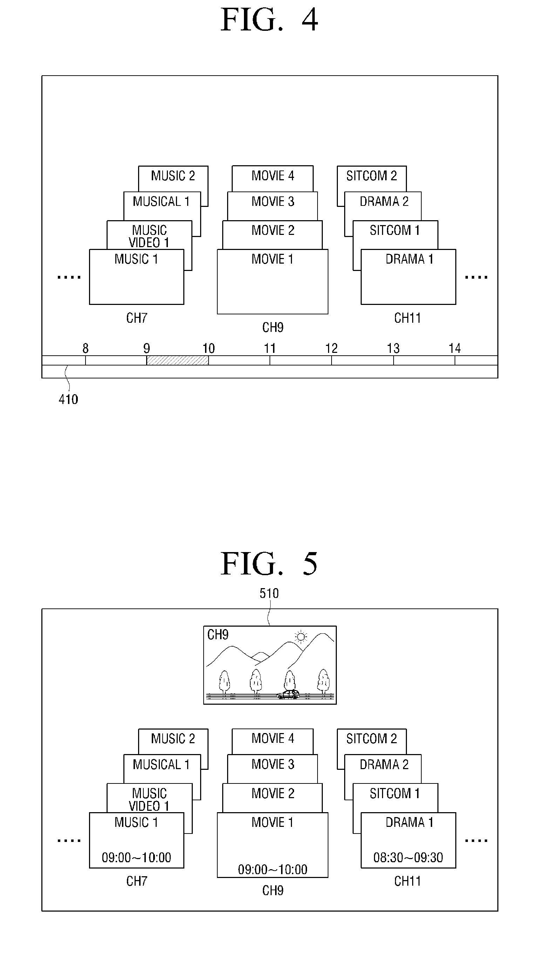

Time information may not be displayed for each item, and may be displayed by a separate time information indicator. This will be explained with reference to FIG. 4.

FIG. 4 is a schematic view of an EPG screen according to another exemplary embodiment of the present invention.

As illustrated in FIG. 4, a plurality of items indicating each program information are aligned on the EPG screen, overlapped with each other. Unlike in FIG. 3, the items at the front part (lower part) do not display time information, and the time information is displayed by a separate time information indicator 410. In this case, the time displayed by the time information indicator 410 is the time regarding the program corresponding to the item in the middle of the items on the front part (lower part).

The above case can be applied when there are many pieces of program information to be displayed in the items on the front part (lower part).

In the exemplary embodiment of the present invention, only the EPG screen is displayed, but this is merely an example. When other screen is added to the EPG screen, the present invention can also be applied. This will be explained with reference to FIG. 5.

FIG. 5 is a schematic view of an EPG screen according to another exemplary embodiment of the present invention. As illustrated in FIG. 5, a plurality of items indicating each program information are aligned and overlapped with each other. However, unlike in FIG. 3, a currently broadcasting program is output on the upper part of the aligned items in FIG. 5. In this case, the control unit 150 controls the video processing unit 129 to scale down the image received from the broadcasting receiving unit 110.

Accordingly, a user may check program information while watching the program. In addition, even when a user moves the EPG screen in order to check program information in other times or at other channels, the information regarding the currently broadcasting program is provided to a user.

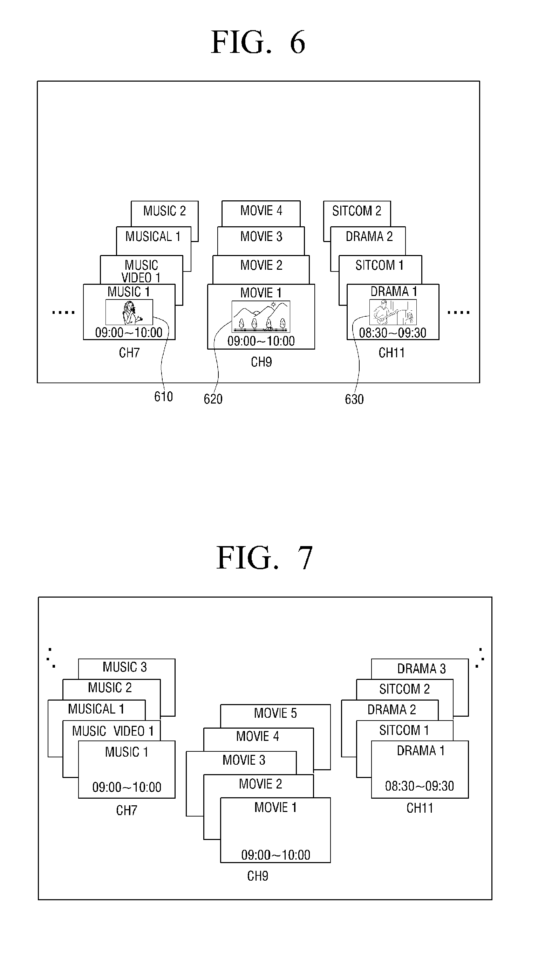

In the above description, the program information such as a program name or broadcasting time is displayed in each item, but this is merely an example provided for convenience of explanation. Other program information such as a program title, genre, channel property can also be displayed. This will be explained with reference to FIG. 6.

FIG. 6 is a schematic view of an EPG screen according to another exemplary embodiment of the present invention. As illustrated in FIG. 6, a plurality of items indicating each program information are aligned and overlapped with each other. However, unlike in FIG. 3, the main images of a program 610, 620, 630 are displayed in the items on the front part of the aligned items, as program information, in FIG. 6. In this case, the broadcasting receiving unit 110 may comprise a plurality of tuners (not shown) and select programs which are sent to a plurality of channels. If the broadcasting receiving unit 110 is composed of a single tuner, the control unit 150 may select programs which are sent to other channels in turn, and capture and store images received from the selected channels in the storage unit 170. In an exemplary embodiment, the images may be thumbnail images.

As such, by providing the main images of programs 610, 620, 630, more intuitive program information can be provided to a user.

In the above description, a plurality of times are aligned along with the two axes, but this is only an example. The present invention can be applied when items are aligned in a different way. This will be explained with reference to FIG. 7.

FIG. 7 is a schematic view of an EPG screen according to another exemplary embodiment of the present invention. As illustrated in FIG. 7, on the EPG screen, a plurality of items indicating each program information are grouped according to a channel, which is the first criterion, and are aligned and displayed according to broadcasting time, which is the second criterion.

The items are grouped according to the first criterion and are aligned in a curve generally disposed from around a left portion to a right portion, or vice versa, of the EPG screen. Set of the grouped items are aligned along a curve generally disposed from around a top portion to a bottom portion, or vice versa, of the EPG screen according to the second criterion.

The items grouped according to the second criterion are overlapped on the drawing, but even if they are not overlapped, the present invention can be applied as long as they are grouped in a predetermined way. The items aligned according to the first criterion do not have to be aligned along with a certain axis, and as long as they are aligned in a predetermined way, the present invention can be applied.

As such, an EPG screen with better perspective can be provided to a user.

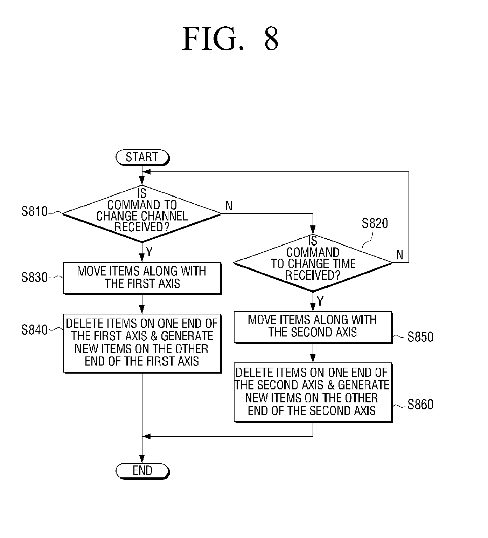

In the above description, the control unit 150 controls the GUI generating unit 160 so that the EPG screen moves according to a command to change the EPG screen received from the user input unit 140. The process of moving and displaying an EPG screen will be explained in greater detail with reference to FIG. 8 to FIG. 11. FIG. 8 is a flow chart provided to explain the movement of an EPG screen.

As illustrated in FIG. 8, the control unit 150 determines whether a command to change a channel is received from the user input unit 140 (S810).

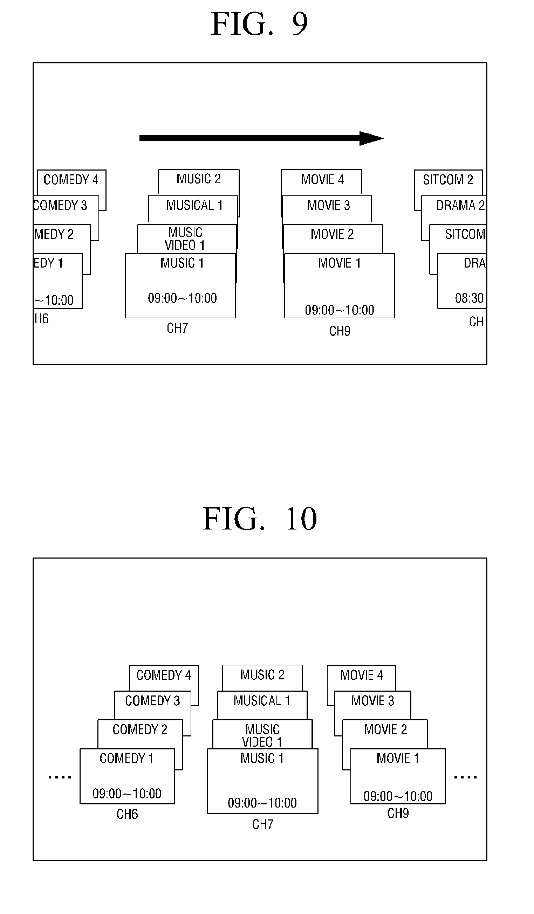

If it is determined that the command to change a channel is received (S810-Y), the control unit 150 moves the items on the EPG screen along with the first axis (S830), deletes, i.e., not show, items in one end of the first axis, and generates new items in the other end of the first axis (S840). The will be explained with reference to FIG. 9 and FIG. 10, and it is assumed that the screen before FIG. 9 and FIG. 10 is FIG. 3.

FIG. 9 and FIG. 10 are schematic views of an EPG screen moving according to an exemplary embodiment of the present invention. As illustrated in FIGS. 9 and 10, if a command to change a channel (particularly a channel down command) is received, a plurality of items move to the right on the EPG screen.

Due to the movement of the items, the items of channel 11 on the right are become partially shown and then are not shown, as depicted in FIG. 9, and the items indicating program information of channel 6, which is the previous channel of channel 7, are aligned and displayed in the empty space on the left, which is created by the movement of the items.

If the movement of the items is completed, only those items indicating program information of channels 6, 7 and 9 are displayed on the EPG screen, as shown in FIG. 10.

As such, a user may view an EPG screen of a program as he or she wants to view by using the command to change a channel.

In the above description, the movement of the EPG screen is explained based on a channel down command, but the present invention can also be applied when the EPG screen moves based on a channel up command. If a channel up command is received, a plurality of items are moved to the left, the items of channel 7 in the left are not shown, and the items indicating program information of the next channel of channel 11 are aligned and displayed in the empty space on the left, which is created by the movement of the items.

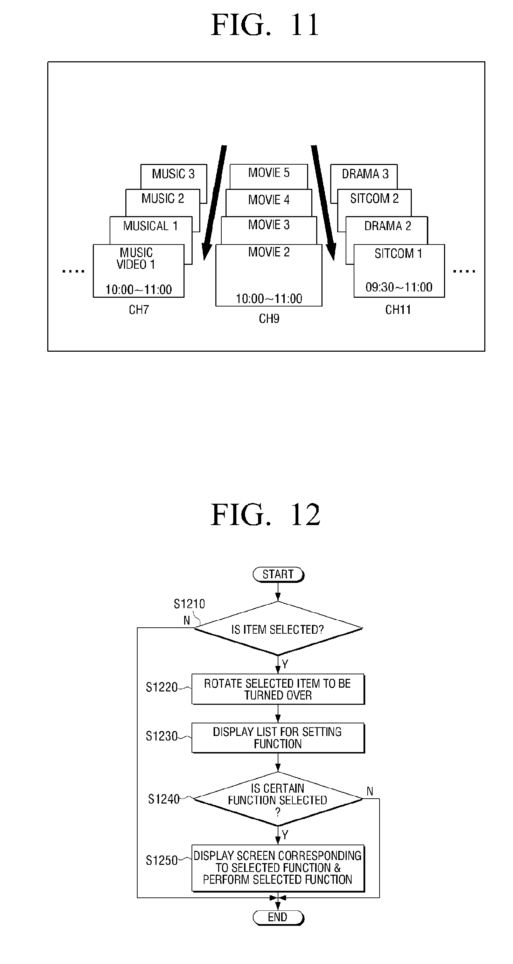

Referring back to FIG. 8, if a command to change a channel is not received (S810-N), the control unit 150 determines whether a command to change time is received. If it is determined that the command to change a channel is received (S820-Y), the control unit 150 moves the items on the EPG screen along with the second axis (S850), deletes items in one end of the second axis, and generates new items in the other end of the second axis (S860). The will be explained with reference to FIG. 11, and it is assumed that the screen before FIG. 11 is FIG. 3.

FIG. 11 is a schematic view of an EPG screen moving according to another exemplary embodiment of the present invention. As shown in FIG. 11, if a command to change time (particularly, a time up command) is received, a plurality of items are moved to the front (lower part) of the EPG screen.

Due to the movement of the items, the items of 09:00∼10:00 and 08:30-09:30, which are on the front (lower part) of the screen, are deleted, i.e., not shown, as depicted in FIG. 11, and the programs 'MUSIC 3', 'MOVIE 5', and 'DRAMA 3', which are the next programs of 'MUSIC 2', 'MOVIE 4', and 'SITCOM 2', are generated in the empty space on the back (upper part), which is created by the movement of the items.

As such, a user may view an EPG screen of a program as he or she wants to view by using the command to change time.

In the above description, the movement of the EPG screen is explained based on a time up command, but the present invention can also be applied when the EPG screen moves based on a time down command. If a time down command is received, a plurality of items are moved to the back (upper part), the items on the back are deleted due to the movement of the items, and the items indicating before 09:00∼10:00 and 08:30∼09:30 are aligned and displayed in the empty space on the left, which is created by the movement of the items.

In the above description, the control unit 150 controls the GUI generating unit 160 so that a list for setting functions can be provided according to a command to set function received from the user input unit 140, and as a result, a user may set a certain function for the program selected from among the EPG screen.

This process will be explained in greater detail with reference to FIG. 12 to FIG. 16. FIG. 12 is a flow chart provided to explain the process of setting functions.

As illustrated in FIG. 12, the control unit 150 determines whether an item is selected via the user input unit 140 (S1210). In this case, the selected item may be an item on the middle of the front part (lower part) of the screen. This is because, when a user inputs a command to change a channel or time in order to select an item, items are moved inversely, rather than a cursor or highlight being moved.

If it is determined that an item is selected (S1210-Y), the control unit 150 rotates the selected item to reverse it (S1220) and displays a function setting list on the back of the rotated item (S1230).

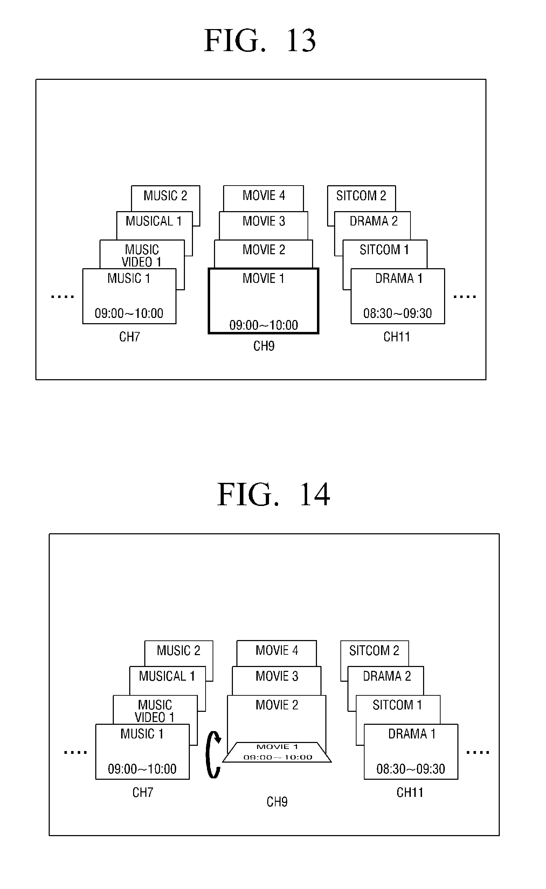

This will be explained with reference to FIG. 13 to FIG. 15.

FIG. 13 to FIG. 15 are schematic views provided to explain the process of setting functions.

As illustrated in FIG. 13, if a command to change a channel or time is received in order to select an item, the item on the middle of the front part (lower part) of the screen is highlighted according to change in channel or time.

If an item is selected, as illustrated in FIG. 14, the item on the middle of the front part (lower part) of the screen is rotated with reference to the first axis. However, rotating the item with reference to the fist axis is only an example, and the present invention can be applied when the item is rotated in other ways.

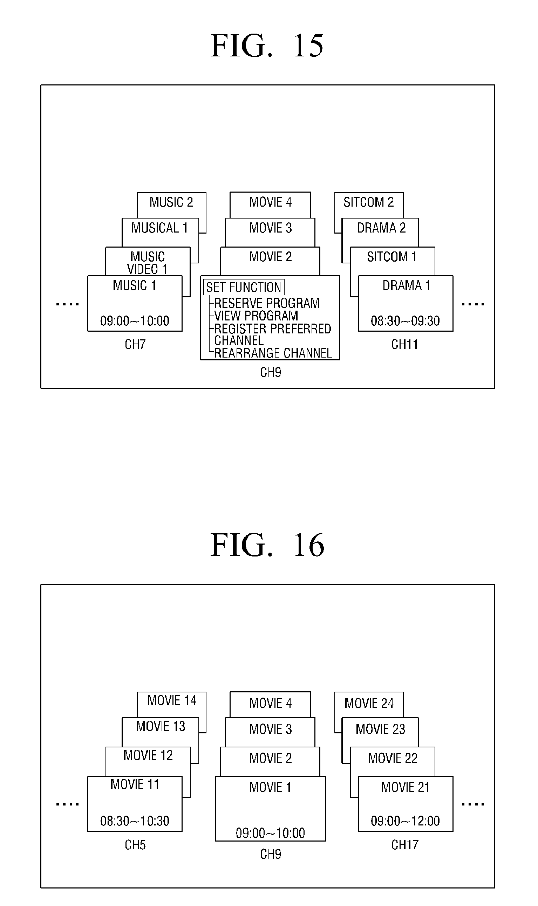

If the item is rotated, as illustrated in FIG. 15, a list for setting functions is displayed on the back of the rotated item. The list for setting functions is provided to set functions such as viewing programs, reserving programs, reserving recording, registering preferred channels, deleting preferred channels and re-arranging channels. Accordingly, a user my select function that he or she wishes to set, and operates a DTV according to the selected function.

The above functions are only examples, and other functions can also be included. Not only functions related to the EPG screen but also functions related to overall DTV can be included in the above functions.

Referring back to FIG. 12, the control unit 150 determines whether a certain function is selected from among the functions in a function setting list (S1240). The control unit 150 displays a screen according to the selected function, and controls the DTV so that the DTV can be operated according to the selected function. This will be explained with reference to FIG. 16.

FIG. 16 is a schematic view illustrating operation when a function to realign channels is selected. As illustrated in FIG. 16, if the function to realign channels is selected, the control unit 150 realigns channels based on the selected channel. A user may decide how to realign channels, that is, based on which criterion channels will be realigned. In the exemplary embodiment of the present invention, channels are realigned based on genre.

Accordingly, the control unit 150 arranges the items related to 'movie' on the left and right side of the current channel with reference to 'movie', which is a genre for channel 9 selected from among the plurality of channels.

As such, a user may manipulate the EPG screen more easily and conveniently.

In the above description, the process of generating an EPG screen in which a plurality of items indicating information of each program are aligned and overlapped with each other, using information extracted from an additional data included in a broadcasting signal or program information extracted from data received via Internet, is explained. However, such program information is not necessarily limited to arranging items.

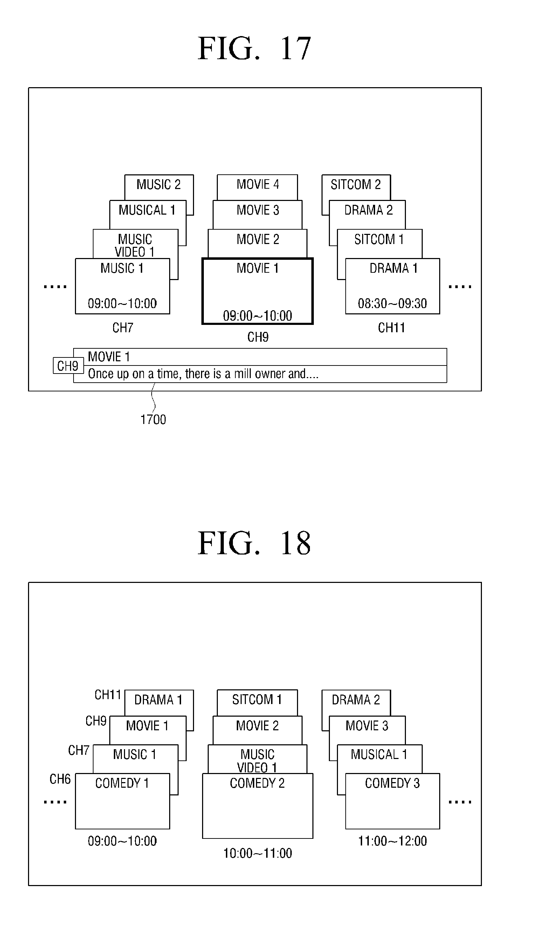

This will be explained with reference to FIG. 17. FIG. 17 is a schematic view of an EPG screen according to another exemplary embodiment of the present invention. As illustrated in FIG. 17, the EPG screen in which a plurality of items are aligned using program information of a DTV is provided.

If a user selects an item from among items indicating information of each program according to program title or purpose of viewing based on information regarding storyline, the DTV displays detailed program information 1700 related to the selected item on the screen, and provides a user with detailed program information regarding the selected item.

In the exemplary embodiment of the present invention, a title and storyline of a program are displayed, but the present invention can be applied when other program information is displayed.

As such, a user may view an EPG screen more easily and conveniently.

In the above description, channels are aligned along with the horizontal axis of the EPG screen, and time is aligned in a direction penetrating the EPG screen. However, this is only an example, and the present invention is not limited to the above example.

This will be explained with reference to FIG. 18. FIG. 18 is a schematic view of an EPG screen according to another exemplary embodiment of the present invention. As illustrated in FIG. 18, in the EPG screen, time is aligned along with the horizontal axis, and channels are aligned in a direction penetrating the EPG screen. More specifically, later broadcasting time are shown towards the right-side of the EPG screen, and channel number is increased towards the back (lower part) of the screen. Accordingly, a user may manipulate the EPG screen more easily and conveniently.

In the above description, the EPG screen is composed based on channel and time, but the present invention can be applied when the EPG screen is composed based on other program information other than channel and time.

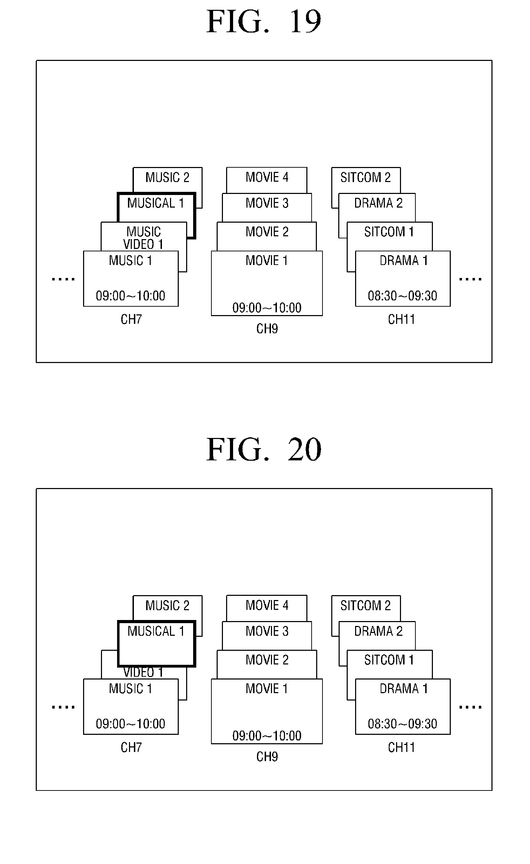

In the above description, the EPG screen is moved according to a command to change time or channel, but this is only an example. Therefore, even if a command to change time or channel is received, the EPG screen may not be moved. This will be explained with reference to FIG. 19 to FIG. 22.

FIG. 19 is a schematic view in which highlights are moved while items are not moved. As illustrated in FIG. 1, if a user manipulates to check program information regarding 'MUSICAL 1', only the highlight of the item can be moved while the EPG screen is not moved, as explained above. Accordingly, a user may move the highlight one time to the left and two times backward to locate the highlight on the item of 'MUSICAL 1.'

A user may also check program information regarding the selected item by selecting the highlighted item. FIG. 20 is a schematic view illustrating that a highlighted item is selected according to an exemplary embodiment of the present invention. As illustrated in FIG. 20, if an item is selected, the front-side of the selected item is exposed, enabling a user to check program information regarding the selected item more easily.

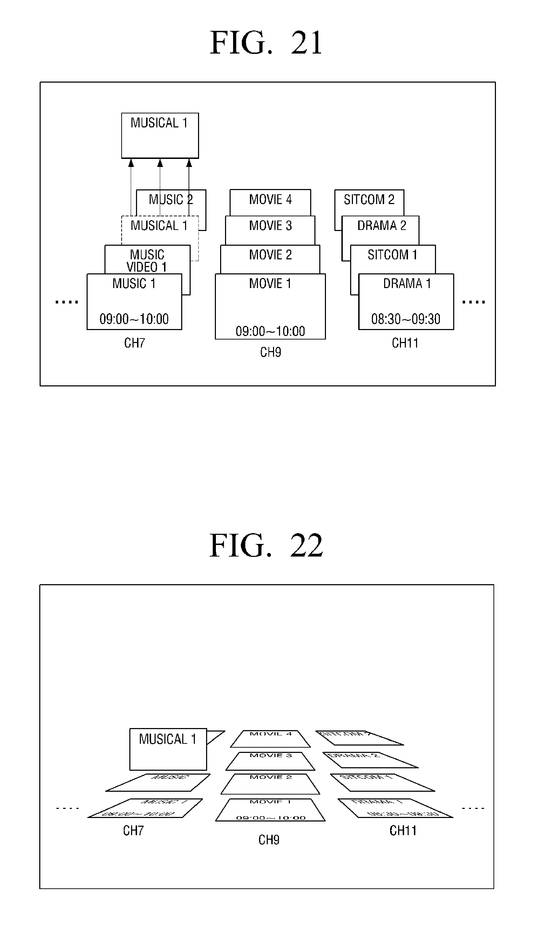

FIG. 21 is a schematic view illustrating that a highlighted item is selected according to another exemplary embodiment of the present invention. As illustrated in FIG. 21, if an item is selected, the selected item is moved to the upper part of the EPG screen, and thus gives the impression that a user picks up the item to select it. Accordingly, a user may check program information of the selected item more easily.

FIG. 22 is a schematic view illustrating that a highlighted item is selected according to another exemplary embodiment of the present invention. As illustrated in FIG. 22, if an item is selected, other items rotate and maintain rotating state, giving the impression that non-selected items are on the floor and only selected items are stood up. Accordingly, a user may check program information regarding the selected item more easily.

The above descriptions with regard to FIG. 19 to FIG. 22 are only examples, and the present invention can be applied to any case in which program information regarding the selected item is provided by moving highlights.

In FIG. 20 to FIG. 22, information regarding broadcasting time of a program and program title is taken as an example of program information of the selected items, but other program information can be displayed on the EPG screen. For instance, if an item is selected, a separate time information indicator may be displayed on the EPG screen as illustrated in FIG. 4, the main image of a program may be displayed on the selected item as illustrated in FIG. 6, or a list for setting function may be displayed on the selected item as illustrated in FIG. 15.

In the above description, program information of DTV is displayed, but this is only an example. The present invention can be applied to not only a DTV but also any multi-media device providing broadcasting program.

Accordingly, a user may view an EPG screen having better perspective and check program information more intuitively.

Although a few preferred embodiments have been shown and described, it will be appreciated by those skilled in the art that various changes and modifications might be made without departing from the scope of the invention, as defined in the appended claims.

## Claims

1. A method for displaying program information, comprising:
generating a Electronic Program Guide (EPG) screen in which a plurality of items indicating program information are aligned to be overlapped with each other; and
displaying the EPG screen.

2. The method according to claim 1, wherein the plurality of items are aligned in a grid shape with reference to a first axis and a second axis.

3. The method according to claim 2, wherein one of the first axis and the second axis is parallel with the EPG screen and the other one of the first axis and the second axis is in a direction which penetrates the EPG screen.

4. The method according to claim 2 or claim 3, wherein the plurality of items overlap with each other along with at least one of the first axis and the second axis.

5. The method according to one of claim 2 to claim 4, further comprising:
moving the plurality of items in a direction of the first axis or the second axis, deleting items on one end of the first axis or the second axis, and generating new items on another end of the first or the second axis, if a command to change the program information is entered.

6. The method according to one of claim 1 to claim 5, wherein a size of the plurality of items becomes bigger as the plurality of items approach a center or a front of the EPG screen.

7. The method according to one of claim 1 to claim 6, wherein the program information includes at least one of a broadcasting time, a title, a genre, a broadcasting channel, channel properties, and a main image of a program.

8. The method according to claim 7, wherein the generating the EPG screen generates the EPG screen so that one of the broadcasting time, the title, the genre, the broadcasting channel, the channel properties, and the main image of a program is aligned with reference to the first axis, and another one is aligned with reference to the second axis.

9. The method according to claim 7 or claim 8, wherein the broadcasting time is earlier as the aligned items approach the front portion.

10. The method according to one of claim 1 to claim 9, further comprising:
displaying a list for setting functions on a back of a selected item after rotating the selected item, if one items is selected from among the plurality of items.

11. The method according to claim 10, wherein the list for setting functions includes at least one function of viewing a program, reserving a program, reserving recording, registering preferred channels and deleting preferred channels.

12. The method according to one of claim 1 to claim 11, wherein the program information includes at least one of information extracted from an additional data included in a broadcasting signal and information extracted from data received via Internet.

13. The method according to one of claim 1 to claim 12, wherein the generating the EPG screen generates the EPG screen by grouping a plurality of items indicating information regarding each program with reference to a first criterion and aligning the plurality of items with reference to a second criterion.

14. The method according to one of claim 1 to claim 13, wherein in the EPG, items indicating a previous channel, a next channel, and program information of the next time are displayed in a first side, a second side, and a third side of the item respectively with reference to items indicating a current channel and program information of current time.

15. A display apparatus, comprising:
a control unit to generate an electronic program guide (EPG) screen in which a plurality of items indicating information of programs are aligned, overlapped with each other; and
a display unit to display the EPG screen.
